# EUROPÄISCHE PATENTSCHRIFT

(11) **EP 4 187 225 B1**
(45) Veröffentlichungstag und Bekanntmachung des Hinweises auf die Patenterteilung: **02.10.2024**
(21) Anmeldenummer: 21211078.7
(22) Anmeldetag: 29.11.2021
(51) Int. Cl.: G01M 99/00, B65B 57/04, G01L 5/00, B29D 99/00, B65B 69/00

(54) **VORRICHTUNG ZUM PRÜFEN EINER VERBINDUNG EINES GARANTIEBANDS UND/ODER MINDESTENS EINES ANBINDUNGSMITTEL EINES VERSCHLUSSDECKELS MIT EINEM DECKELGRUNDKÖRPER UND ZUM PRÜFEN EINER DICHTIGKEIT DES DECKELGRUNDKÖRPERS**
DEVICE FOR TESTING A CONNECTION OF A WARRANTY BAND AND/OR AT LEAST ONE FASTENING MEANS OF A CLOSURE LID TO A LID BASE BODY AND FOR TESTING A TIGHTNESS OF THE LID BASE BODY
DISPOSITIF DE CONTRÔLE D'UNE LIAISON D'UNE BANDE DE GARANTIE ET/OU D'AU MOINS UN MOYEN D'ATTACHE D'UN COUVERCLE DE FERMETURE AVEC UN CORPS DE BASE DU COUVERCLE ET DE CONTRÔLE D'UNE ÉTANCHÉITÉ DU CORPS DE BASE DU COUVERCLE

(43) Veröffentlichungstag der Anmeldung: 31.05.2023
(73) Patentinhaber: PackSys Global AG, 8630 Rüti (CH)
(72) Erfinder: Hürlimann, Martin, 3373 Röthenbach (CH)
(74) Vertreter: Keller Schneider Patent- und Markenanwälte AG

(56) Entgegenhaltungen:
- EP-A1- 3 623 791
- DE-A1- 102011 106 832
- US-B1- 8 316 697

## Beschreibung

### Technisches Gebiet

Die Erfindung betrifft eine Vorrichtung zum Prüfen einer Verbindung eines Garantiebands und/oder mindestens eines Anbindungsmittels eines Verschlussdeckels mit einem Deckelgrundkörper und zum Prüfen einer Dichtigkeit des Deckelgrundkörpers, umfassend ein Mitnahmeelement zum Ergreifen des Garantiebands und/oder des mindestens einen Anbindungsmittels, ein I<ontal<telement für den Deckelgrundkörper, wobei das Mitnahmeelement und das I<ontal<telement derart in einer Interal<tionsrichtung relativ zueinander beweglich sind, dass eine Abreissl<raft auf Verbindungselemente zwischen Deckelgrundkörper und Garantieband und/oder das Anbindungsmittel ausübbar ist und eine Kraftmessvorrichtung zur Messung der Abreissl<raft während der Relativbewegung zwischen dem Garantieband und/oder Anbindungsmittel und dem Deckelgrundkörper. Die Erfindung betrifft weiter eine Anlage zum Schneiden eines Garantiebands und/oder mindestens eines Anbindungsmittels eines Verschlussdeckels und ein Verfahren zum Prüfen einer Verbindung eines Garantiebands und/oder mindestens eines Anbindungsmittels eines Verschlussdeckels mit einem Deckelgrundkörper und zum Prüfen einer Dichtigkeit des Deckelgrundkörpers.

### Stand der Technik

Es ist bekannt, Verschlussdeckel, z. B. Flaschenverschlüsse mit Deckeln aus Kunststoff oder Metallblech, mit Garantiebändern und/oder mit Anbindungsmitteln zu versehen. Garantiebänder dienen zur Originalitätssicherung und stellen sicher, dass unmittelbar erkennbar ist, wenn ein Verschlussdeckel nach der Erstbefüllung eines Behälters zwischenzeitlich entfernt und wieder angebracht wurde. Dies könnte ein Hinweis auf einen Austausch oder eine Verunreinigung des Behälterinhalts sein und zeigt dem Nutzer an, dass er den Behälterinhalt nicht nutzen - ein Lebensmittel also beispielsweise nicht konsumieren - sollte.

Garantiebänder sind über eine Schwächungslinie an einem Grundkörper des Verschlussdeckels angeordnet. Beim Entfernen des Verschlussdeckels (z. B. durch Abschrauben) wirkt das Garantieband derart mit einem Gegenstück am Behälter zusammen, dass es vom Deckelgrundkörper abgerissen und/oder entlang seines Umfangs durchtrennt wird. In beiden Fällen ist angesichts des beschädigten bzw. nicht mehr vorhandenen Garantiebandes ersichtlich, dass der Verschlussdeckel (zwischenzeitlich) entfernt wurde.

Bekannte Garantiebänder sind über eine Mehrzahl von Verbindungselementen (z. B. Stegen bzw. Brücken) am Deckelgrundkörper angebracht, wobei der Grundkörper, die Verbindungselemente und der Ring einstückig ausgebildet sind. Sie umfassen weiter einen umlaufenden wulstartigen Vorsprung am Behälter, welcher das Garantieband beim Entfernen des Deckels zurückhält. Die Schwächungslinie kann während des Formens des Deckels mit eingebracht werden oder erst in einem nachträglichen Schnitt, z. B. durch das Einbringen von geeigneten Schlitzen.

Anbindungsmittel ("Tether") stellen sicher, dass der Verschlussdeckel auch nach dem Öffnen und dem Entfernen vom Behälter an letzterem gehalten bleibt. Es wird so verhindert, dass der Verschlussdeckel verloren geht oder unachtsam weggeworfen wird, was zu einer unerwünschten Abfallbelastung führt. Die Anbindungsmittel verlaufen in der Regel zwischen einem Ring, der am Behälter (z. B. am Flaschenhals) verbleibt, insbesondere dem Garantiering, und dem Grundkörper des Verschlussdeckels. Sie sind bandartig ausgeführt und werden beim Öffnen des Verschlussdeckels aufgrund einer geeigneten Schlitzgeometrie am Verschlussdeckel erzeugt. Es sind Anbindungsmittel mit einer einzigen solchen Verbindung und solche mit mehreren Verbindungen bekannt.

Sowohl bei Garantiebändern als auch bei Anbindungsmitteln sollte sichergestellt werden, dass die Garantiebänder die gestellten Anforderungen (z. B. hinsichtlich einer zum Ab- bzw. Aufreissen oder zur Herstellung benötigten Kraft) erfüllen. Dazu werden stichprobenweise Deckel der Produktion entnommen und geprüft. Bisher erfolgte die Prüfung in der Regel manuell bzw. mit manuell bedienten, speziell ausgerüsteten Zug-Dehnungs-Messgeräten, wobei die Abreissl<raft mit Hilfe eines Kraftsensors gemessen und die zum Abreissen (oder Aufreissen) benötigte Kraft bestimmt wurde. Liegt diese Kraft ausserhalb eines vorgegebenen Bereichs (welcher u. a. von der Art des Behälters und dem Material sowie der Geometrie des Deckels abhängig ist), liegt ein Fehler im Herstellungsprozess vor, der zu beheben ist, z. B. durch die Anpassung von Betriebsparametern und/oder den Austausch von Werkzeugen.

Die WO 2020/053286 A1 der vorliegenden Anmelderin beschreibt eine Vorrichtung zum Prüfen einer Verbindung eines Garantiebands einer Originalitätssicherung eines Verschlussdeckels mit einem Deckelgrundkörper, umfassend ein Mitnahmeelement zum Ergreifen des Garantiebands, ein Anschlagelement für den Deckelgrundkörper, wobei das Mitnahmeelement und das Anschlagelement derart relativ zueinander beweglich sind, dass eine Abreissl<raft auf das Garantieband ausübbar ist, eine Kraftmessvorrichtung zur Messung der Abreissl<raft während der Relativbewegung des Garantiebands und des Deckelgrundkörpers und eine Trennvorrichtung zum Durchtrennen des Garantiebandes nach dem Abreissen vom Deckelgrundkörper.

Damit lässt sich der Prüfvorgang für die Abreissl<räfte systematisch und bei Bedarf automatisiert durchführen. Allerdings müssen Verschlussdeckel weiteren Anforderungen genügen. Eine weitere Eigenschaft, die von Verschlussdeckeln gefordert ist, ist die Dichtheit. Zum einen soll das Entweichen von Gasen, insbesondere Kohlendioxid bei kohlesäurehaltigen Getränken, verhindert werden, zum anderen ist auch das Eindringen von Gasen aus der Umwelt unerwünscht. Für die Dichtheitsprüfung sind spezifische Geräte verfügbar.

Die US 8,316,697 B1 (S. Tuomela et al.) betrifft eine Vorrichtung zum Messung der I<ohlendioxid-Durchlässigl<eit des Verschlusses einer Flasche für kohlensäurehaltige Getränke. Die Vorrichtung umfasst dazu ein Halteelement, welches in einen mit einem Flaschenhals versehenen Verschluss eingeführt wird, um eine Testkammer zu bilden, wobei das Halteelement mit O-Ringen zur Innenfläche des Flaschenhalses abgedichtet wird. Ein Prüfgas kann über einen Durchgang des Halteelements in die Testkammer geleitet werden, um die Durchlässigkeit des Gases durch den verschlossenen Flaschenhals zu messen.

Die DE 10 2011 106832 A1 (I<rones AG) betrifft ein Verfahren zur Bestimmung der Dichtigkeit von Behältern. Ein Zentrierkopf zum Greifen und Drehen des Behälters ist vorgesehen, welcher derart auf den Behälter einwirken kann, dass CO₂, das in einer im Behälter enthaltenen Flüssigkeit enthalten ist, freigesetzt und gemessen wird. Die Prüfung der verschiedenen Eigenschaften von Verschlussdeckeln gestaltet sich aber insgesamt als recht aufwendig.

### Darstellung der Erfindung

Aufgabe der Erfindung ist es, eine dem eingangs genannten technischen Gebiet zugehörende Vorrichtung zu schaffen, welche die Prüfung von Verschlussdeckeln vereinfacht.

Die Lösung der Aufgabe ist durch die Merkmale des Anspruchs 1 definiert. Gemäss der Erfindung weist das I<ontal<telement eine Dichtstruktur auf, so dass eine abgedichtete Kammer zwischen dem I<ontal<telement und dem Deckelgrundkörper ausbildbar ist, und es sind eine Einrichtung zur Einstellung eines vorgegebenen Gasdrucks in der Kammer und eine Einrichtung zur Erfassung eines Gasaustritts aus der Kammer oder Gaseintritts in die Kammer vorhanden.

Das I<ontal<telement dient somit sowohl zur Bildung der abgedichteten Kammer für die Dichtigkeitsprüfung als auch als Anschlagelement bei der Prüfung der Verbindung des Garantiebands bzw. des Anbindungsmittels. Es wirkt mit der Deckelinnenseite zusammen, namentlich mit dem Boden des Deckelgrundkörpers und/oder mit dessen Mantel. Insbesondere wirkt es mit entsprechenden Dichtlippen zur Abdichtung des Verschlussdeckels gegenüber dem Flaschenhals zusammen.

Die Dichtstruktur ist insbesondere an der Stirnseite des I<ontal<telements und/oder an dessen Mantelfläche angeordnet. Sie wirkt mit der Innenseite des Verschlussdeckels zusammen, um die Abdichtung der Kammer zu erreichen. Im einfachsten Fall handelt es sich bei der Dichtstruktur um eine stirn- oder mantelseitig umlaufende Struktur mit gleichbleibendem Profil. Die Dichtstruktur kann durch eine Materialportion des I<ontal<telements, also einstückig mit diesem, ausgebildet sein oder durch ein separates Element, das am I<ontal<telement angeordnet ist.

Als Abreissl<raft wird hier eine Kraft verstanden, die so am Garantieband oder am Anbindungsmittel angreift und in eine solche Richtung wirkt, dass - bei einem ausreichenden Wert (der "zum Abreissen erforderlichen Kraft") - das Garantieband bzw. das Anbindungsmittel oder jeweils ein Element davon vom Deckelgrundkörper abgerissen und/oder entlang seines Umfangs aufgerissen wird. Insbesondere handelt es sich dabei um eine Kraft, bei der eine Brückenverbindung zwischen Grundkörper und Garantiering oder eine Verbindung des Anbindungsmittels zwischen Grundkörper und Ring reisst.

Die Messung der Abreissl<raft umfasst bevorzugt die Aufnahme eines Kraft-Zeit- bzw. Kraft-Weg-Verlaufs mindestens bis zum Abreissen. Alternativ wird aber nur eine maximale Abreissl<raft gemessen bzw. gespeichert oder weitergegeben; diese entspricht im Wesentlichen der erwähnten zum Abreissen erforderlichen Kraft.

Die erfindungsgemässe Vorrichtung kann zur Prüfung sowohl der Dichtigkeit eines Verschlussdeckels als auch der Eigenschaften von dessen Garantieband und/oder Anbindungsmittels eingesetzt werden. Sie kann aber in Bezug auf einen einzelnen Verschlussdeckel oder ein ganzes Los nur für die Dichtigkeitsprüfung oder die Prüfung der Band-/Anbindungsmitteleigenschaften eingesetzt werden. Es müssen also nicht zwingend in jedem Fall beide Modalitäten geprüft werden, sondern die Prüfschritte "Dichtigkeit", "Garantieband" und/oder "Anbindungsmittel" sind bevorzugt selektiv aktivierbar und deaktivierbar.

Die erfindungsgemässe Vorrichtung ermöglicht die Messung sowohl der Dichtigkeit als auch der Eigenschaften von Garantiebändern und/oder Anbindungsmitteln und zwar in derselben Einspannung. Entsprechend ist der konstruktive Aufwand für die Vorrichtung reduziert, und die Prüfungsschritte können insgesamt wirtschaftlicher ablaufen.

Die Einrichtung zur Erfassung des Gasaustritts oder Gaseintritts umfasst bevorzugt eine Druckmessvorrichtung zur Messung eines Kammerdrucks. Diese Einrichtung kann den Druck insbesondere einlassseitig messen. Mit ihrer Hilfe kann zunächst sichergestellt werden, dass ein vorgegebener gewünschter Überdruck oder Unterdruck in der Kammer erzeugt wird, anschliessend wird die Kammer zusammen mit einem Drucksensor der Druckmessvorrichtung von der Druckluftquelle isoliert und der Druckabfall oder die Druckzunahme während einer vorgegebenen Zeit (oder bis zum Erreichen eines vorgegebenen Werts) gemessen. Die Dichtigkeit lässt sich somit unmittelbar quantifizieren. Falls der Restdruck nach der vorgegebenen Zeit ausreichend hoch, der Druckabfall also ausreichend gering, ist, hat der Verschlussdeckel die Dichtigkeitsprüfung bestanden. (Analog kann von einem Bestehen der Prüfung ausgegangen werden, wenn eine gewisse minimale Zeit verstrichen ist, bis der vorgegebene Restdruck erreicht wird.)

Anstelle einer Druckmessung kann das Drucl<gasreservoir, in dem der vorgegebene Druck herrscht, nach dem Abtrennen der Zufuhrleitung über eine Bypassleitung mit geringem Querschnitt mit der Kammer verbunden bleiben, wobei im Bypass eine Durchflussmessung durchgeführt wird, z. B. mit Hilfe eines kalorimetrischen Durchflusssensors. Die Strömung zeigt an, dass zur Aufrechterhaltung des Kammerdrucks Luft nachströmen muss, wobei die Menge nachströmender Luft wiederum ein Mass für die (Un-)Dichtigl<eit ist.

In anderen Ausführungsformen umfasst die Einrichtung zur Erfassung des Gasaustritts oder Gaseintritts anstelle oder zusätzlich zur Druckmessvorrichtung eine Schnüffelsonde. Diese ermöglicht eine präzise und schnelle Erfassung eines geeigneten Prüfgases (z. B. einer Mischung aus Stickstoff und Wasserstoff), das aus der Kammer in die Umgebung entweicht.

Bevorzugt umfasst die Vorrichtung eine Auflage für den Deckelgrundkörper, die in der Interal<tionsrichtung linear beweglich ist, so dass während des Prüfens der Dichtigkeit der Deckelgrundkörper zwischen der Auflage und dem I<ontal<telement passend aufnehmbar ist. So lässt sich auf einfache Weise eine Abdichtung mit kontrollierten Bedingungen erreichen.

Es ist von Vorteil, wenn die Auflage eine elastische Oberfläche aufweist, insbesondere aus einem Elastomer oder Polymer mit einer Härte von 85 Shore A oder weniger. Dies ermöglicht einen Ausgleich für geringfügige Variationen in der Form der Decl<elgrundfläche, z. B. aufgrund herstellungsbedingter Toleranzen oder Temperaturschwankungen. Zudem kann aufgrund der elastischen ("weichen") Oberfläche ein sanftes Anfahren des Arbeitsbereichs bei der Dichtigkeitsprüfung erreicht werden.

Mit Vorteil ist eine selektiv aktivierbare Positioniereinrichtung für den Deckelgrundkörper vorhanden. Sie stellt sicher, dass der Deckelgrundkörper vor dem Erfassen durch das I<ontal<telement präzise positioniert ist. Dadurch wird die Zuverlässigkeit der Vorrichtung verbessert. Zudem wird erreicht, dass beim Kontaktieren des Deckelgrundkörpers und entsprechend beim Abdichten zwischen I<ontal<telement und Deckel reproduzierbare Bedingungen geschaffen werden. Nach dem Erfassen wird die Anschlageinrichtung deaktiviert (z. B. unter die Auflage zurückgefahren oder seitlich wegbewegt), um die weiteren Schritte nicht negativ zu beeinflussen.

Falls die Vorrichtung wie oben beschrieben eine Auflage für den Deckelgrundkörper aufweist, kann die Positioniereinrichtung mit der Ablage zusammenwirken und z. B. als Anschlag ausgebildet sein. Dieser kann beispielsweise zur Aktivierung über die Oberfläche der Auflage ausgefahren und zur Deaktivierung unter die Oberfläche zurückgezogen werden.

Bei einer bevorzugten Ausführungsform ist das I<ontal<telement stirnseitig an einem Dorn ausgebildet, und das Mitnahmeelement ist entlang der Interal<tionsrichtung linear relativ zum Dorn beweglich. Dabei können der Dorn ortsfest und das Mitnahmeelement beweglich ausgeführt sein. Es ist auch möglich, das Mitnahmeelement ortsfest auszuführen und den Dorn beweglich. Schliesslich ist es möglich, beide Elemente entlang der Interal<tionsrichtung unabhängig voneinander beweglich auszuführen.

Der Dorn hat insbesondere die Geometrie eines geraden I<reiszylinders, wobei der Durchmesser etwas kleiner ist als der Innendurchmesser des Verschlussdeckels. Die stirnseitige Fläche des Dorns ist derart ausgebildet, dass sie mit dem Deckelgrundkörper zusammenwirken kann. Der Boden oder eine andere Partie des Deckelgrundkörpers wirkt auf der Deckelinnenseite mit der stirnseitigen Fläche zusammen und definiert die axiale Position des Deckelgrundkörpers. Durch eine Relativbewegung zwischen Dorn und Mitnahmeelement, bei welcher sich das Mitnahmeelement von der Stirnseite des Dorns weg bewegt, wird eine Abreissl<raft auf das Garantieband bzw. das Anbindungsmittel ausgeübt.

Die Aussenform des Dorns ist im Endbereich insbesondere der Aussengeometrie eines Behälterabschnitts nachempfunden, der mit dem Verschlussdeckel zusammenwirkt. Er weist insbesondere die für die Abdichtung relevanten Konturen des Behälterabschnitts, also beispielsweise des Flaschennacl<ens und Halses, auf.

Beim Mitnahmeelement kann es sich um eine wulstartige Struktur handeln, welche im Wesentlichen der Struktur am Behälter entspricht, mit welchem der Verschlussdeckel zusammenwirken soll. Das Mitnahmeelement kann aber auch durch mehrere beabstandete Strukturen, z. B. Nocken, gebildet sein. In beiden Fällen werden der Verschlussdeckel mit angebrachtem Garantieband bzw. Anbindungsmittel und das Mitnahmeelement vor der Messung der Abreissl<raft so relativ zueinander positioniert, dass das Garantieband bzw. Anbindungsmittel das Mitnahmeelement zumindest bereichsweise hintergreift. Dazu kann - insbesondere bei einem Mitnahmeelement mit fixer Form - der Verschlussdeckel mit Garantieband bzw. Anbindungsmittel über das Mitnahmeelement aufgeschoben bzw. das Mitnahmeelement in den Verschlussdeckel eingeschoben werden. Mitnahmeelemente mit veränderlicher Form, z. B. mit radial beweglichen Krallen, lassen sich in den Deckelinnenraum einführen und werden erst dann gespreizt. Weiter sind auch Greifelemente, z. B. mit zangenartigen I<lemmmechanismen, einsetzbar, die das Garantieband umlaufend oder an beabstandeten Stellen erfassen.

Das Mitnahmeelement umschliesst insbesondere hülsenförmig den Dorn. So wird eine umlaufend gleichmässige Interaktion zwischen Mitnahmeelement und Garantieband bzw. Anbindungsmittel erreicht. Die koaxiale Anordnung von Dorn und hülsenförmigem Mitnahmeelement ermöglicht zudem eine stabile und einfache Lagerung des Mitnahmeelements und eine definierte Weiterbewegung des abgetrennten Garantiebandes, indem dieses weiter vom Dorn geführt wird und auf diesem zunächst aufgefädelt bleibt.

Mit Vorteil weist eine Dornlängsrichtung zu einer horizontalen Ebene einen Winkel von mindestens 30° auf, wobei die Bewegung zur Messung der Abreissl<raft nach oben erfolgt und wobei die Vorrichtung eine Auffangeinrichtung für den Deckelgrundkörper und das abgerissene Garantieband umfasst.

Wenn die Längsrichtung des Dorns eine substanzielle vertikale Komponente aufweist, können der Deckelgrundkörper und das Garantieband mit Hilfe der Schwerkraft vom Dorn weg befördert werden. Zusätzliche Fördermittel in der unmittelbaren Nachbarschaft des Dorns (wie Absaugvorrichtungen oder Magnete bei der Verarbeitung von Verschlussdeckeln aus ferromagnetischen Materialien) erübrigen sich. Die Auffangeinrichtung stellt sicher, dass die vom Dorn nach unten fallenden Grundkörper und Bänder für den Abtransport sicher aufgefangen werden. Anstelle der Gravitation oder zur Unterstützung derselben kann - wie unten ausgeführt - Druckluft zum Abblasen insbesondere des Grundkörpers eingesetzt werden.

Die Auffangeinrichtung kann durch die erwähnte Auflage für den Deckelgrundkörper gebildet oder an dieser angeordnet sein. So wird der konstruktive Aufwand minimiert.

Mit Vorteil weist die Auffangeinrichtung eine in der Auffangposition geneigte Auffangfläche auf, so dass der aufgefangene Deckelgrundkörper und das aufgefangene Garantieband aufgrund der Schwerkraft automatisch weiter gefördert werden. Dadurch können gesonderte Fördermittel, die mit der Auffangeinrichtung zusammenwirken, vermieden werden.

Mit Vorteil weist die Dornlängsrichtung zur horizontalen Ebene eine Neigung von 10-80° auf, und die Auffangfläche der Auffangeinrichtung steht in der Auffangposition senkrecht zur Dornlängsrichtung.

Die schräge Anordnung des Dorns und der Auffangfläche der Auffangeinrichtung ermöglicht eine besonders einfache Konstruktion, bei welcher insbesondere eine Einheit, welche den Dorn sowie die Lagerung der Auffangeinrichtung umfasst, zu einer Horizontalen geneigt verbaut sein kann. Die schräge Anordnung ermöglicht es zudem, dass die Zuführungsrichtung für die Verschlussdeckel in Längsrichtung des Dorns und die aufgrund der Schwerkraft vertikal nach unten gerichtete Abführungsrichtung für die Grundkörper und Garantiebänder unterschiedlich sind. Mögliche Konflikte zwischen der Zu- und der Abführung können so bereits konstruktiv minimiert werden.

Eine geneigte Anordnung kann auch bei der Auflage für den Decl<elgrundl<örper vorteilhaft sein, insbesondere dann, wenn diese zur Bereitstellung des zu prüfenden Verschlussdeckels dient. In diesem Fall kann der Deckel mit Hilfe der Schwerkraft auf die Auflage gefördert werden (z. B. gegen einen Anschlag als Positioniereinrichtung), so dass konstruktiv aufwendige Fördereinrichtungen im Bereich der Auflage vermieden werden.

Besonders bevorzugt ist eine ganze Baugruppe der Vorrichtung mit Zuführung, Dorn und Abführung insgesamt schräg angeordnet. So lässt sich der konstruktive Aufwand minimieren.

Alternativ ist auch eine vertikale oder annähernd vertikale Anordnung des Dorns möglich: Das abzuführende Material kann in diesem Fall beispielsweise mit Hilfe einer Ausblasvorrichtung aus dem Zuführungsweg für die Verschlussdeckel wegbefördert werden, und durch ein Durchtrennen des Garantiebandes in ausreichend viele Teile (z. B. mindestens 2 oder 3 Teile) lässt sich sicherstellen, dass das Band nicht am Dorn verbleibt, sondern aufgrund der Schwerkraft auf die Auffangeinrichtung fällt. Auch eine horizontale Anordnung des Dorns bzw. eine geneigte Anordnung mit einem Winkel von unter 10° ist möglich. In diesem Fall kann es sinnvoll sein, eine gesonderte Vorrichtung zum Lösen des Deckelgrundkörpers vom Dorn vorzusehen, z. B. einen im Dorn gelagerten Ausstossmechanismus, oder - wie weiter unten dargelegt - einen Luftstoss mit dem Zuführmittel für das Druckgas auszulösen. In diesem Fall kann es zudem von Vorteil sein, wenn das Garantieband an mehreren Stellen durchtrennt wird, so dass sich alle Teile sicher vom Dorn lösen.

Mit Vorteil umfasst die Vorrichtung eine Ausblasvorrichtung zum Abtransport des Deckelgrundkörpers und/oder des Garantiebandes. Die Ausblasvorrichtung kann insbesondere seitlich gerichtete Luftdüsen umfassen, so dass sich mit einem Luftstoss der Deckelgrundkörper und/oder das Garantieband seitlich über die Auffangeinrichtung wegbewegen lässt.

Mit Vorteil umfasst die Vorrichtung eine Trennvorrichtung zum Durchtrennen des Garantiebandes nach dem Abreissen vom Deckelgrundkörper.

Das Durchtrennen des Garantiebands führt zu einer erheblichen Vereinfachung der Abfuhr des Garantiebands von der Prüfvorrichtung, insbesondere dann wenn die Prüfvorrichtung derart ausgebildet ist, dass die abgerissenen Garantiebänder auf ein Element aufgefädelt werden. Das Durchtrennen ermöglicht dann einen Abtransport, der nicht zwingend axial entlang des Elements erfolgen muss. Es kann somit grundsätzlich eine unbeschränkte Anzahl von Messungen durchgeführt werden. Dies im Gegensatz zum Fall, in welchem zunächst mehrere Garantieringe auf dem Element aufgefädelt bleiben.

Das Durchtrennen ist nicht nur dann sinnvoll, wenn das Garantieband als Ganzes vom Deckelgrundkörper abgerissen wird, sondern auch dann, wenn es beim Öffnungsvorgang entlang des Umfangs so durchtrennt wird, dass Abschnitte verbleiben, die einen Winkel von mehr als 180° beschreiben.

Bevorzugt umfasst die Trennvorrichtung mindestens ein im Umfangsbereich des Dorns angeordnetes Schneidmesser, welches derart ausgebildet ist, dass das Garantieband bei einer Bewegung über das Schneidmesser, entlang der Dornlängsrichtung, durchtrennt wird.

Beim Schneidvorgang ist das Garantieband auf dem Mitnahmeelement gelagert, so dass bei entsprechender Zustellung des Schneidmessers ein sicherer Schnitt erfolgt. Das Schneidmesser kann relativ zum Dorn fix angeordnet werden, die notwendige Relativbewegung ergibt sich aus der axialen Bewegung des Mitnahmeelements relativ zum Dorn (und damit zum Schneidmesser).

Alternativ werden bewegliche Schneidmesser oder Schneidscheiben bzw. andersartige Trennwerkzeuge, z. B. beheizte Schwerter oder Laserwerl<zeuge, eingesetzt.

Bevorzugt umfasst die Trennvorrichtung mindestens zwei Schneidmesser, welche derart angeordnet sind, dass das Garantieband an zwei umfangsmässig beabstandeten Stellen durchtrennt wird. Beispielsweise können zwei Schneidmesser vorgesehen werden, die einander gegenüberliegend angeordnet sind (also einen Winkel von 180° einschliessen). Auch möglich ist es, drei oder mehr Schneidmesser einzusetzen, die bevorzugt gleichmässig entlang des Umfangs angeordnet sind.

Zwei oder mehr Teile des Garantiebandes, welche durch das Durchtrennen entstehen, lassen sich deutlich einfacher und zuverlässiger abtransportieren als ein einziges (durchschnittenes) Band. Bei einem Durchtrennen in mehrere Teile lassen sich diese beispielsweise auch auf einfache Weise absaugen.

Mit Vorteil weist ein hülsenförmiges Mitnahmeelement mindestens eine Nut in Dornlängsrichtung auf, welche mit dem mindestens einen Schneidmesser zusammenwirkt. Die Nut auf der Aussenseite des Mitnahmeelements ermöglicht ohne weiteres ein Passieren des Schneidmessers, ohne dass das Mitnahmeelement oder das Schneidmesser bewegliche Teile aufweisen muss. Gegenüber einem mehrteiligen Mitnahmeelement, dessen Teile jeweils zwischen den Schneidmessern angeordnet sind, ergibt sich eine einfachere Konstruktion mit verbesserter Stabilität.

Mit Vorteil umfasst die Vorrichtung weiter eine Auswerteeinheit zum Empfangen von Messwerten der Messungen der Abreissl<raft, zum Feststellen anhand dieser Messwerte, ob die Verbindung des Garantiebands und/oder des mindestens einen Anbindungsmittels mit dem Deckelgrundkörper vorgegebene Eigenschaften erfüllt und zum Ausgeben von Ergebnissen dieser Feststellung. Analog dazu empfängt die Auswerteeinheit auch Messwerte von der Einrichtung zur Erfassung des Gasaustritts oder Gaseintritts und verarbeitet diese, um festzustellen, ob die Abdichtung den Erfordernissen genügt. Die Ausgabe der Ergebnisse kann über ein integriertes Ausgabegerät erfolgen. So kann das Ergebnis auf einen Bildschirm optisch dargestellt und/oder über einen Lautsprecher akustisch ausgegeben werden. Die Ausgabe kann auch über eine Schnittstelle erfolgen, die mit einem Ausgabegerät, einem Gerät zur Weiterverarbeitung und/oder Speicherung der Informationen oder mit einer Maschinensteuerung verbindbar ist.

Im einfachsten Fall wird derjenige Wert der Abreissl<raft bestimmt und ausgegeben bzw. weitergeleitet, welcher zum Abreissen oder Durchtrennen des Garantiebandes bzw. des Anbindungsmittels geführt hat. Es handelt sich dabei in der Regel um den maximalen Kraftwert, welcher während eines Prüfvorgangs gemessen wurde. (In der Regel tritt die maximale Kraft bereits vor dem eigentlichen Abreissen oder Durchtrennen auf. Dennoch ist die maximale Kraft ein taugliches Mass zur Beurteilung der korrekten Ausbildung der Verbindung zwischen Garantieband bzw. Anbindungsmittel und Grundkörper.)

Bevorzugt ist nun aber von der Auswerteeinheit anhand mehrerer empfangener Messwerte für dieselbe Verbindung auch feststellbar, ob einer von mehreren Stegen der Verbindung mit dem Garantieband und/oder ein Element von mehreren Elementen des Anbindungsmittels eine verglichen mit anderen Stegen bzw. Elementen erheblich reduzierte oder erhöhte Abreissl<raft aufweist. Dazu werden mehrere Kraftwerte bestimmt und analysiert. Das frühzeitige oder verzögerte Abreissen eines Stegs bzw. Elements äussert sich in der Regel durch mehrere (lokale) Kraftmaxima bzw. einen stufenförmigen Abfall der gemessenen Kraft. Liegen solche vor und weisen sie einen bestimmten minimalen Abstand im I<raft-Weg- bzw. Kraft-Zeit-Verlauf auf, kann auf ein nichtstandardgemässes Abreissen und damit auf einen möglichen Produktionsfehler geschlossen werden. Die mehreren empfangenen Messwerte können vor der Analyse vorbearbeitet werden, z. B. kann eine Mittelwertbildung erfolgen, es kann eine Standardabweichung oder Ableitung berechnet werden oder es werden andere statistische Berechnungen vorgenommen.

Bevorzugt umfasst die Vorrichtung
d) eine Zufuhreinrichtung zur automatischen Zufuhr des Verschlussdeckels zum Mitnahmeelement und zum I<ontal<telement; und
e) eine Abfuhreinrichtung zur automatischen Abfuhr des Deckelgrundkörpers und des abgerissenen Garantiebandes vom Mitnahmeelement und/oder dem I<ontal<telement.

Die Anbindungsmittel werden dabei zusammen mit dem Garantieband und/oder mit dem Deckelgrundkörper abgeführt, je nachdem, wo das Abreissen stattgefunden hat. Es ist auch möglich, dass die Anbindungsmittel in einem mittleren Bereich reissen, so dass ein Teil mit dem Garantieband und ein anderer Teil mit dem Deckelgrundkörper abgeführt wird.

Die Vorrichtung kann so vollautomatisch eingesetzt werden und namentlich unmittelbar an eine Anlage zur Herstellung von Verschlussdeckeln mit Garantiebändern und/oder Anbindungsmitteln angekoppelt werden. Beispielsweise werden im Anschluss an diejenige Station, in welcher die Garantiebänder bzw. Anbindungsmittel hergestellt oder fertiggestellt werden, periodisch Verschlussdeckel ausgeleitet (z. B. mit Hilfe einer Blaseinheit) und zur Zufuhreinrichtung der Vorrichtung geführt. So kann beispielsweise jede Minute oder alle 30 s (oder noch häufiger) eine Prüfung vorgenommen werden. Grundsätzlich lassen sich mit einer entsprechend ausgebildeten und betriebenen erfindungsgemässen Vorrichtung bis zu 5 Verschlussdeckel pro Minute (oder sogar noch mehr) sowohl hinsichtlich Dichtigkeit als auch hinsichtlich der Verbindungsqualität von Garantiering und Anbindungsmittel prüfen. Herkömmliche manuelle Kontrollen wurden oft nur halbstündlich oder gar nur stündlich vorgenommen. Bei einer Produktionsrate von bis zu 3'500 Deckeln pro Minute betrug der mögliche Ausschuss im schlechtesten Fall somit bis zu 210'000 Verschlussdeckel.

Zeigt die Prüfung Probleme an, können umgehend entsprechende Massnahmen an der Anlage vorgenommen werden. Dadurch wird der Ausschuss minimiert.

Eine erfindungsgemässe Anlage zum Schneiden eines Garantiebands und/oder eines Anbindungsmittels eines Verschlussdeckels umfasst mit Vorteil
- eine Schneideinrichtung zum Erzeugen umfangsseitiger Schnitte zur Bildung des Garantiebands und/oder des Anbindungsmittels an einem Deckelgrundkörper des Verschlussdeckels;
- eine nachfolgend zur Schneideinrichtung angeordnete erfindungsgemässe Vorrichtung zum Prüfen einer Verbindung des Garantiebands und/oder des Anbindungsmittels mit dem Deckelgrundkörper und zum Prüfen einer Dichtigkeit des Deckelgrundkörpers mit einer automatischen Zufuhreinrichtung und einer automatischen Abfuhreinrichtung,
wobei eine Zufuhr des Verschlussdeckels von der Schneideinrichtung zur Vorrichtung zum Prüfen automatisch erfolgt.

Bei einer bevorzugten Ausführungsform der erfindungsgemässen Anlage ist die Steuereinrichtung derart ausgebildet, dass in Abhängigkeit der übermittelten Ergebnisse ein Verarbeitungsparameter der Schneideinrichtung, insbesondere eine Temperatur eines Schneidmessers der Schneideinrichtung, beeinflussbar ist.

Es hat sich gezeigt, dass beim Betrieb einer solchen Schneideinrichtung für Verschlussdeckel aus Kunststoff die Schärfe des Schneidmessers, welche sich während des Betriebs aufgrund der Abnutzung ändert, und die Temperatur des Schneidmessers, welche sich mit Hilfe einer steuerbaren Heizung beeinflussen lässt, die kritischen Grössen für das Arbeitsergebnis sind. Namentlich kann ein Schärfeverlust des Schneidmessers zu einem gewissen Grad durch eine erhöhte Temperatur kompensiert werden. Ergeben sich als durch einen Schärfeverlust weniger tiefe oder unvollständige Schlitze, führt dies zu einer erhöhten Abreissl<raft, die zum Ab- oder Durchtrennen des Garantiebandes bzw. zur Erzeugung des Anbindungsmittels notwendig ist. Dies wird von der Prüfvorrichtung festgestellt und an die Steuereinrichtung der Anlage übermittelt. Letztere kann dann die Heizung des Schneidmessers hochregeln, um die Temperatur des Schneidmessers zu erhöhen, bis wieder befriedigende Werte der Abreissl<raft resultieren. Eine zu kleine Abreissl<raft der Anbindungsmittel und/oder des Garantiebands kann auf einen Fehlschnitt hinweisen.

Falls das Schneidmesser bereits auf eine vorgegebene maximale Temperatur beheizt wird, kann bei der Feststellung nicht-standardgemässer Verschlussdeckel ein Messerwechsel bzw. ein Nachschleifvorgang für das Messer ausgelöst werden. Diese Massnahmen können automatisch in der Schneideinrichtung oder manuell ausgeführt werden.

Alternativ oder zusätzlich zur Temperatur kann auch eine Zustellung des Schneidmessers in Abhängigkeit der übermittelten Ergebnisse gesteuert werden.

Es kann von Vorteil sein, wenn eine Zuordnung eines geprüften Verschlussdeckels zu einem Teilwerkzeug der Schneideinrichtung, welches beim Schneiden des Garantiebands bzw. des Anbindungsmittels mit dem Verschlussdeckel zusammengewirl<t hat, und/oder zu einer Kavität einer Spritzgussform bzw. einer Compression-Molding-Form vorgenommen wird, so dass anhand der Messungen der Abreissl<raft festgestellte Fehlfunktionen diesem Teilwerkzeug und/oder der Kavität zuordenbar sind. Bei bekannten Schneideinrichtungen sind Schneidmesser mit bogenförmiger Schneide umfangsseitig stationär angeordnet, und die zu verarbeitenden Schlussdecl<el werden von mehreren auf einem Drehtisch angeordneten drehbaren Spanndornen diesen Schneidmessern entlang geführt. Die erwähnte Zuordnung ermöglicht in diesem Fall die Feststellung, ob bei einer dieser Spanndorne eine Fehlfunktion vorliegt. Ebenso kann eine nicht konforme Abreissl<raft auf ein Problem mit der Kavität einer zur Herstellung des Verschlussdeckels benutzten Spritzgussform bzw. Compression-Molding-Form hinweisen. Die Zuordnung zur Kavität erfolgt insbesondere, indem vor der Prüfung des Garantiebands bzw. Anbindungsmittels der betreffende Verschlussdeckel mittels einer Kamera optisch derart erfasst wird, dass eine im Deckel eingravierte Kennung der Kavität ausgelesen und an die Prüfvorrichtung oder direkt an eine übergeordnete Steuerung weitergegeben werden kann.

Die erfindungsgemässe Vorrichtung zum Prüfen ist nicht nur im Zusammenhang mit Schneideinrichtungen einsetzbar, sondern auch mit anderen Einrichtungen zur Herstellung von Garantiebändern und Anbindungsmitteln, z. B. Stanzeinrichtungen oder Spritzgiessmaschinen.

Bei einem erfindungsgemässen Verfahren, wie in Anspruch 15 definiert, zum Prüfen einer Verbindung eines Garantiebands und/oder mindestens eines Anbindungsmittels eines Verschlussdeckels mit einem Deckelgrundkörper und zum Prüfen einer Dichtigkeit des Deckelgrundkörpers, insbesondere mit einer erfindungsgemässen Vorrichtung, werden folgende Schritte durchgeführt:
a) Kontaktieren des Deckelgrundkörpers mit einem I<ontal<telement, derart dass zwischen dem I<ontal<telement und dem Deckelgrundkörper eine abgedichtete Kammer ausgebildet wird;
b) Einstellung eines vorgegebenen Gasdrucks in der Kammer;
c) Erfassen eines Gasaustritts aus der Kammer oder Gaseintritts in die Kammer;
d) Ergreifen des Garantiebands und/oder des Anbindungsmittels mit einem Mitnahmeelement;
e) Durchführen einer Relativbewegung zwischen dem Mitnahmeelement und dem I<ontal<telement, so dass eine Abreissl<raft auf Verbindungselemente zwischen Deckelgrundkörper und Garantieband und/oder das mindestens eine Anbindungsmittel ausgeübt wird;
f) Messen der Abreissl<raft während der Relativbewegung zwischen dem Garantieband und/oder Anbindungsmittel und dem Deckelgrundkörper.

Die Druckprüfung und die Messung der Abreissl<raft erfolgt also in derselben Aufspannung. Das I<ontal<telement dient sowohl zur Abdichtung als auch als Anschlag für die Einwirkung der Abreissl<räfte. Das Ergreifen des Garantiebands bzw. Anbindungsmittels mit dem Mitnahmeelement kann grundsätzlich vor, während oder nach der Erfassung des Gasaustritts oder Gaseintritts stattfinden. Die Schritte a)-f) müssen nicht in der angegebenen Reihenfolge stattfinden. Es ist u. a. grundsätzlich möglich, die Dichtigkeitsprüfung erst nach dem Prüfen der Verbindung des Garantiebands bzw. des mindestens einen Anbindungsmittels durchzuführen.

Bei der Prüfung eines Verschlussdeckels mit Garantiering und Anbindungsmitteln werden bei der Messung der Abreissl<räfte mit wachsendem Abstand zwischen I<ontal<telement und Mitnahmeelement zunächst Brückenverbindungen des Garantierings reissen, was sich in einem ersten Kraftmaximum bzw. ersten Kraftmaxima äussert. Bei einem deutlich grösseren Abstand ergibt sich dann ein weiteres Maximum (oder weitere Maxima) beim Reissen der Verbindung(en) des mindestens einen Anbindungsmittels. Weil sich die Abstände und damit auch die Zeitpunkte deutlich voneinander unterscheiden, können die Ergebnisse ohne weiteres dem Garantieband bzw. dem mindestens einen Anbindungsmittel zugeordnet werden. Zur Beschleunigung des Messvorgangs kann die Relativbewegung nach dem Abreissen des Garantiebandes zwischenzeitlich beschleunigt werden, bis eine (in der Regel vorbekannte) minimale Trenndistanz für das mindestens eine Anbindungsmittel erreicht wird.

Mit Vorteil umfasst das Verfahren den zusätzlichen Schritt des Einleitens von Druckgas zum Abblasen des Deckelgrundkörpers vom I<ontal<telement. Dieser Schritt wird nach erfolgter Messung der Abreissl<raft ausgeführt. Entsprechend sind im Rahmen der erfindungsgemässen Vorrichtung die Zuführmittel für das Einleiten des Druckgases derart steuerbar, dass zum Abblasen ein Druckstoss bewirkt wird.

Mit Vorteil umfasst das erfindungsgemässe Verfahren den zusätzlichen Schritt des Messens einer Andruckkraft zwischen dem I<ontal<telement und dem Deckelgrundkörper vor und/oder während des Einstellens des vorgegebenen Gasdrucks und/oder des Erfassens des Gasaustritts oder Gaseintritts, wobei insbesondere dieselbe Kraftmesseinrichtung verwendet wird wie zum Messen der Abreissl<raft. Auf diese Weise kann sichergestellt werden, dass bei der Dichtigkeitsprüfung reproduzierbare Bedingungen eingehalten werden.

Entsprechend ist im Rahmen der erfindungsgemässen Vorrichtung die Kraftmessvorrichtung derart steuerbar, dass die entsprechende Messung der Andruckkraft bewirkt wird.

Mit Vorteil wird zur Ausbildung der Kammer der Deckelgrundkörper zwischen dem I<ontal<telement und einer Auflage passend aufgenommen, und nach dem Erfassen des Gasaustritts oder Gaseintritts und vor der Durchführung der Relativbewegung wird die Auflage vom Deckelgrundkörper zurückgezogen. So wird die Messung der Abreissl<raft nicht durch die Auflage behindert. Mit Vorteil erfolgt der Rückzug nur teilweise, so dass die Auflage während des Messens einer Abreissl<raft des Anbindungselements zur Stabilisierung der Decl<elposition beitragen kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A-C: Schrägbilder eines Verschlussdeckels mit Garantieband und Anbindungsmittel im Ausgangszustand, nach dem Abtrennen des Garantierings und nach der Entfernung vom Flaschenhals;
- Fig. 2A, B: eine Seiten- und eine Vorderansicht einer Ausführungsform der erfindungsgemässen Vorrichtung zum Prüfen einer Verbindung eines Garantiebands und eines Anbindungsmittels eines Verschlussdeckels mit einem Deckelgrundkörper und zum Prüfen einer Dichtigkeit des Deckelgrundkörpers;
- Fig. 3: einen Querschnitt durch den Dorn und die damit zusammenwirkenden Elemente;
- Fig. 4: ein Schrägbild der Mitnahmehülse der erfindungsgemässen Vorrichtung;
- Fig. 5-11: Querschnitts- und Seitenansichten der Vorrichtung, zur Erläuterung des mit der erfindungsgemässen Vorrichtung durchgeführten Prüfverfahrens; und
- Fig. 12: ein I<raft-Weg-Diagramm eines Prüfvorgangs.

Grundsätzlich sind in den Figuren gleiche Teile mit gleichen Bezugszeichen versehen.

### Wege zur Ausführung der Erfindung

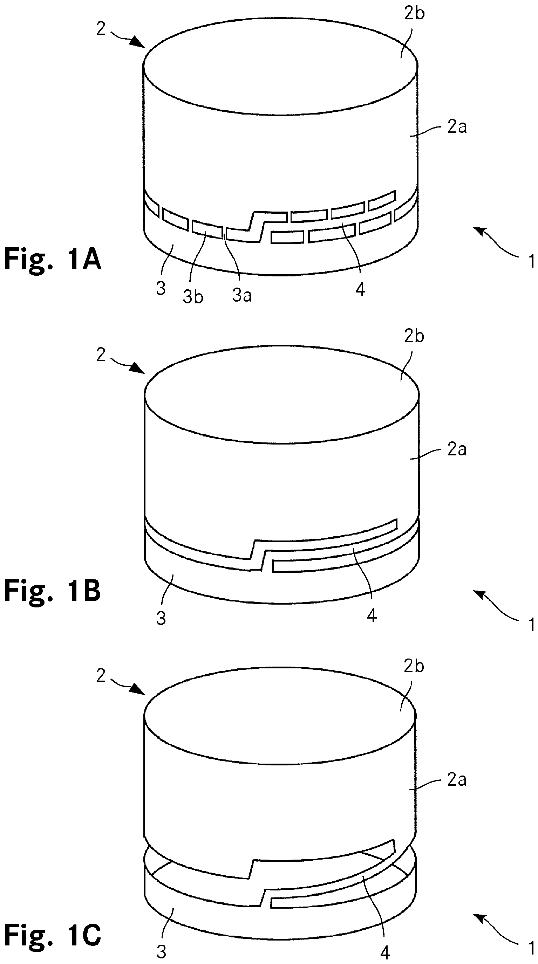

Die Figuren 1A-1C zeigen Schrägbilder eines Verschlussdeckels mit Garantieband und Anbindungsmittel im Ausgangszustand, nach dem Abtrennen des Garantierings und nach der Entfernung vom Flaschenhals. Der Verschlussdeckel 1 weist einen Deckelgrundkörper 2 auf, welcher aus einem kreiszylindrischen Mantel 2a und einem Boden 2b gebildet ist, sowie ein Garantieband 3 mit einem bandförmigen Teil, welches über mehrere Stege 3a mit dem Mantel 2a des Deckelgrundkörpers 2 verbunden ist. Die Geometrie des Stegbereichs ist derart, dass nach dem Aufreissen der Stege 3a das Garantieband 3 über eine Verbindung 4 weiterhin mit dem Deckelgrundkörper 2 verbunden bleibt (vgl. Figur 1B). Diese Verbindung bleibt auch bestehen, wenn der Verschlussdeckel 1 weiter aufgeschraubt und schliesslich vom Flaschenhals getrennt wird. Über dem am Flaschenhals verbleibenden Garantieband 3 ist der Deckelgrundkörper also auch nach dem Öffnen weiterhin über die Verbindungen gehalten.

Der bandförmige Teil ist nach innen verdickt, so dass sich hinter dem bandförmigen Teil in Richtung des Bodens 2b ein Hinterschnitt ergibt. Im Zusammenhang mit dem beschriebenen Ausführungsbeispiel wird davon ausgegangen, dass der Verschlussdeckel 1 aus Kunststoff (insbesondere Polyethylen PE oder Polypropylen PP) hergestellt ist und in an sich bekannter Weise ein Innengewinde zum Aufschrauben auf eine Flasche, insbesondere eine Getränkeflasche aus PET oder Glas, aufweist. Der Verschlussdeckel 1 wird im Spritzgussverfahren gefertigt, das Garantieband 3 wird anschliessend hergestellt, indem mittels einer Schneideinrichtung Schlitze 3b zwischen den verbleibenden Stegen 3a eingebracht werden und indem ein unterer Abschnitt des bandförmigen Teils nach innen hochgeklappt wird, so dass sich die Verdickung ergibt.

Die Erfindung lässt sich auch mit andersartigen Deckeln einsetzen, z. B. mit solchen aus Metallblech oder mit solchen, bei welchen das Garantieband und/oder das Anbindungsmittel ohne zusätzlichen Schneidprozess bereits während des Spritzgiessens ausgebildet wird. Anstelle einer einzelnen Verbindung können nach dem Durchtrennen der Stege mehrere Verbindungen bestehen bleiben, um den Deckelgrundkörper 2 weiterhin am Flaschenhals zu halten.

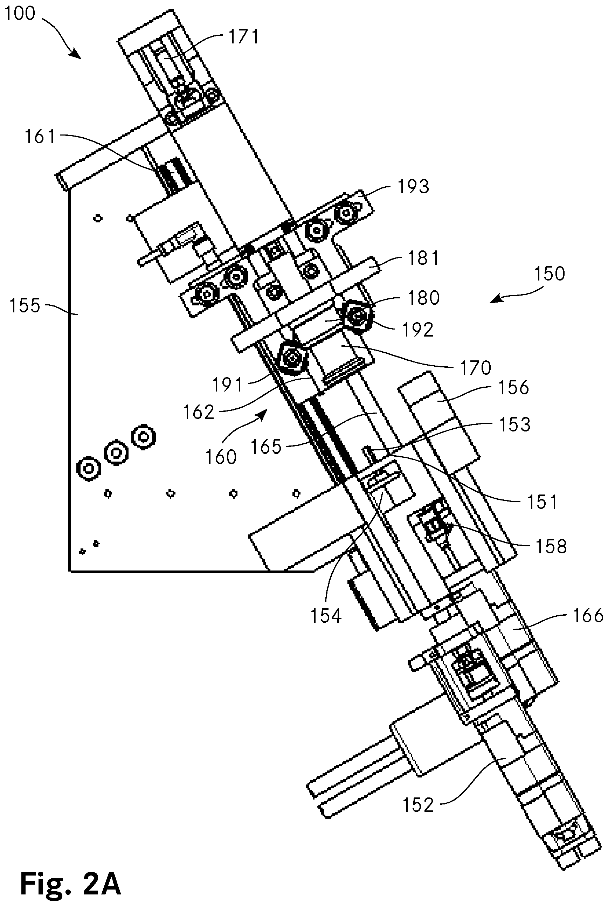

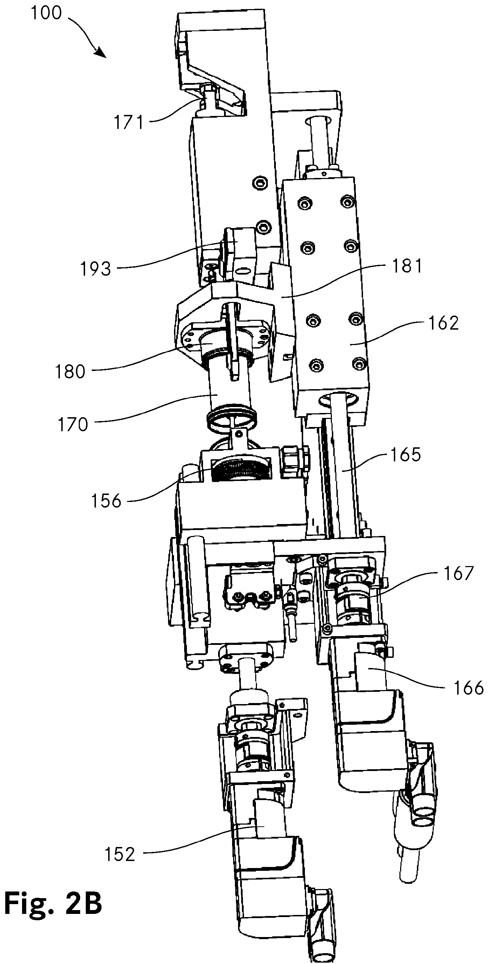

Die Figuren 2A und 2B sind eine Seitenansicht und eine Vorderansicht einer Ausführungsform der erfindungsgemässen Vorrichtung zum Prüfen einer Verbindung eines Garantiebands und eines Anbindungsmittels eines Verschlussdeckels mit einem Deckelgrundkörper und zum Prüfen einer Dichtigkeit des Deckelgrundkörpers.

Die Vorrichtung dient zum Prüfen von Verschlussdeckeln mit Garantieband 3 und Verbindungen 4 eines Anbindungsmittels (Tether).

Die Prüfvorrichtung 100 umfasst eine Prüfeinheit 150, die an einer Grundplatte 155 angeordnet ist. Die Grundplatte 155 bildet eine schräge Stützfläche für die Prüfeinheit 150 aus, ihre Hauptebene ist senkrecht orientiert. Auf der Stützfläche der Grundplatte 155 ist eine Schiene 161 einer Linearführung 160 befestigt. Auch eine Spindel 165 mit dem zugehörigen Antrieb, einem Servomotor 166, ist an ihrem oberen Ende an der Grundplatte 155 und an ihrem unteren Ende an einer (hier nicht dargestellten) Grundplatte der Prüfvorrichtung 100 gelagert. Der Servomotor 166 (oder alternativ ein Schrittmotor) ist unterhalb der Grundplatte angeordnet und über eine Kupplung 167 mit der Spindel 165 verbunden. Die Längsachse der Spindel 165 verläuft parallel zur Stützfläche und damit zur Schiene 161 der Linearführung 160.

Die Spindel 165 wirkt mit einem Kugelumlauf zusammen, der an einem Schlitten 162 angeordnet ist. Der Schlitten 162 weist Führungselemente auf, die mit der Schiene 161 zusammenwirken. Durch Betätigen der Spindel 165 mittels des Servomotors 166 kann der Schlitten entlang der Schiene 161 bewegt werden.

Die Prüfeinheit 150 umfasst weiter einen kreiszylindrischen Dorn 170, welcher über eine Kraftmesseinheit 171 mit der Grundplatte 155 verbunden ist. Die Längsausdehnung des Dorns 170 verläuft parallel zur Stützfläche, zur Schiene 161 und zur Spindel 165. Die Kraftmesseinheit 171 misst auf die Stirnfläche des Dorns 170 übertragene Druckkräfte.

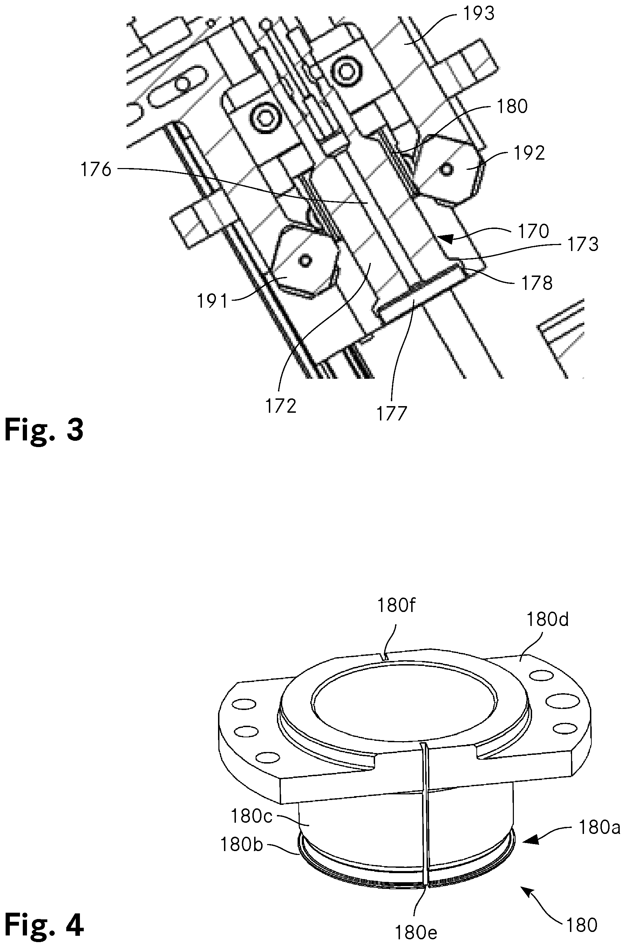

Die Figur 3 zeigt einen Querschnitt durch den Dorn 170 und die damit zusammenwirkenden Elemente. Der Dorn 170 umfasst einen Schaft 172 und einen am freien Ende am Schaft 172 ausgebildeten Kopf 173. Im Bereich des Kopfes 173 vergrössert sich der Durchmesser des Dorns 170 und er weist eine Aussengeometrie auf, die im Wesentlichen derjenigen eines Flaschennacl<ens und -halses in der mit der Innenseite eines Verschlussdeckels zusammenwirkenden Abschnitt entspricht. Zentral im Schaft ist eine Gaszuführung 176 angeordnet, die in eine zylindrische Ausnehmung 177 im Kopf 173 mündet. Die Ausnehmung 177 ist rundum durch eine kreisförmige Wand 178 abgeschlossen.

Am Schlitten 162, der mit Hilfe der Linearführung 160 entlang der Schiene 161 bewegbar ist, ist über eine Halterung 181 eine Mitnahmehülse 180 angeordnet. Ein Schrägbild derselben ist in der Figur 4 gezeigt. Die Mitnahmehülse 180 weist einen zylindrischen Abschnitt auf mit einem Kontaktbereich 180a für einen Verschlussdeckel, in welchem ein Wulst 180b zum Hintergreifen des Garantiebandes ausgebildet ist. Hinten an den Kontaktbereich 180a schliesst sich ein Schaftbereich 180c an, der in einen Befestigungsflansch 180d übergeht. Mit dem Befestigungsflansch 180d ist die Mitnahmehülse 180 auswechselbar an der Halterung 181 befestigt. Weiter weist die Mitnahmehülse 180 zwei axiale Nuten 180e, 180f auf, die einander gegenüberliegend am Aussenmantel, vom Befestigungsflansch 180d über den Schaftbereich 180c bis in den Kontaktbereich 180a verlaufend angeordnet sind. (Die Nuten verlaufen in der Ansicht gemäss Figur 2A parallel zur Zeichnungsebene.)

Die Mitnahmehülse 180 umschliesst den Dorn 170 koaxial. Mit Hilfe der Linearführung 160 lässt sich die Mitnahmehülse 180 entlang des Dorns 170 bewegen.

Über eine Halterung 193 an der Grundplatte 155 angeordnet sind ferner zwei Schneidmesser 191, 192, deren Schneiden sich in einem vorgegebenen Abstand parallel zum Mantel des Dorns 170 erstrecken. Die Schneidmesser 191, 192 sind wie der Dorn 170 stationär angeordnet und alle drei Elemente weisen einen festen Ortsbezug auf. Die Schneidmesser 191, 192 und die Mitnahmehülse 180 sind so angeordnet, dass die Schneiden der Schneidmesser 191, 192 in den Nuten der Mitnahmehülse 180 aufgenommen sind, wenn die Mitnahmehülse 180 über den Bereich der Schneidmesser 191, 192 bewegt wird. Die Mitnahmehülse 180 lässt sich somit von einer Position vollständig unterhalb der Schneidmesser 191, 192 bis in eine Position vollständig oberhalb der Schneidmesser 191, 192 bewegen. Falls ein Garantieband von der Mitnahmehülse 180 mitgenommen ist, indem der Wulst 180b mit dem nach innen ragenden Abschnitt bzw. der Verdickung des Garantiebandes zusammenwirkt, wird das Band an zwei diametral gegenüberliegenden Stellen durch die beiden Schneidmesser 191, 192 zerschnitten, so dass zwei bogenförmige Abschnitte von je 180° gebildet werden.

Die Prüfvorrichtung 150 umfasst weiter einen Tisch 151, der parallel zur Schiene 161 mittels eines zweiten Servomotors 152 (oder alternativ eines Schrittmotors) in seiner Höhe verstellt werden kann. Am Tisch ist ein Anschlag 153 angeordnet, der mittels eines Verstellmechanismus 154 aus der in der Figur 2A gezeigten aktivierten Position, in der zwei Finger des Anschlags 153 über die Auflagefläche des Tisches 151 hinausragen, in eine deaktivierte Position bewegt werden kann, in der die Finger unter die Auflagefläche zurücktreten. Die Finger sind verstellbar an einem Grundteil des Anschlags 153 angeordnet, so dass sich ihre Positionierung einer Geometrie der zu prüfenden Verschlussdeckel anpassen lässt. Am Tisch 151 ist weiter ein Zuführungskanal 156 angeordnet, durch den Verschlussdeckel in der in den Figuren 2A, 2B dargestellten untersten Tischposition auf die Auflagefläche zugeführt werden können. Am Zuführungskanal 156 ist ein Sensor 158 angeordnet zur Feststellung, ob ein Verschlussdeckel für die Prüfung bereitsteht.

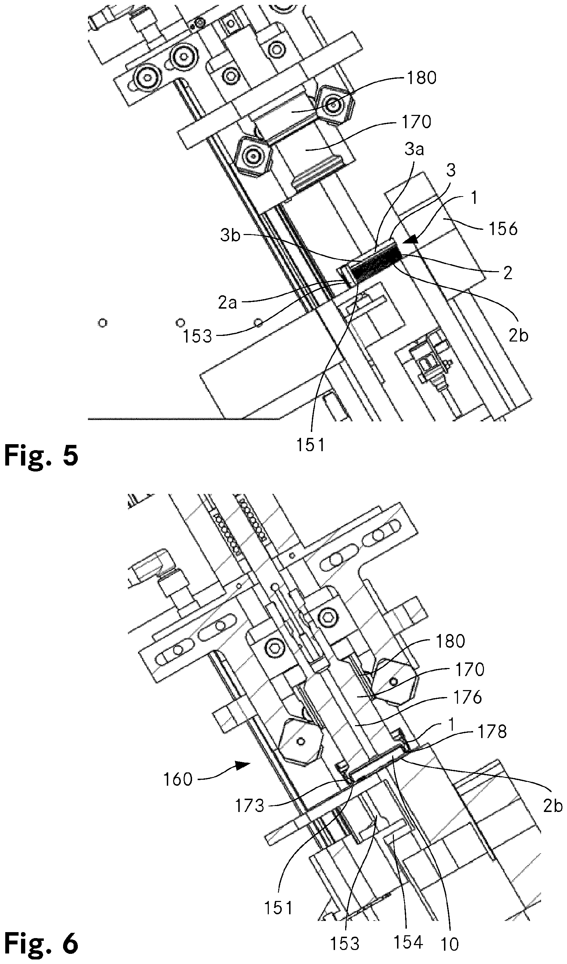

Das mit der erfindungsgemässen Vorrichtung durchgeführte Prüfverfahren wird anhand der schematischen Darstellungen der Figuren 5-11 erläutert.

Zu Beginn befindet sich die Vorrichtung in der in den Figuren 2A, 2B und 5 dargestellten Ausgangsposition: Der Tisch 151 befindet sich in seiner unteren Position, die Mitnahmehülse 180 befindet sich in einer oberen, zurückgezogenen Position, und der Anschlag 153 ist aktiviert, d. h. seine Finger sind über die Auflagefläche des Tisches 151 ausgefahren.

Um die Testsequenz auszulösen, muss zunächst sichergestellt sein, dass sich kein Verschlussdeckel mehr in der Prüfposition auf dem Tisch 151 befindet. Dies wird durch entsprechende Sensoren überprüft. Auch das Vorhandensein eines Prüflings im Zuführkanal 156 wird sensorisch geprüft.

Sind alle Bedingungen erfüllt, wird ein Verschlussdeckel 1 durch den Zuführungskanal 156 auf den Tisch 151 gefördert. Er liegt mit dem Boden 2b des Deckelgrundkörpers 2 auf der Auflagefläche des Tisches 151 auf, die Öffnung und das Garantieband 3 weisen nach oben. Die Endposition des Verschlussdeckels 1 wird durch den aktivierten Anschlag 153 vorgegeben. Sie liegt entlang der Bewegungsrichtung des Tisches 151 und der Mitnahmehülse 180 zentrisch unter dem Dorn 170 (siehe Figur 5).

Als nächstes wird nun der Tisch 151 mit dem Verschlussdeckel 1 angehoben, bis der Kopf 173 des stationären Dorns 170 in den Verschlussdeckel 1 eindringt und sich mit der Wand 178 auf der Deckelinnenseite abstützt. In der resultierenden Position ist der Verschlussdeckel 1 mit seinem Boden 2b zwischen dem Tisch 151 und dem Kopf 173 des Dorns 170 eingeklemmt. Nun wird der Anschlag 153 deaktiviert, indem die Finger des Anschlags 153 mittels des zugeordneten Verstellmechanismus 154 unter die Auflagefläche des Tisches 151 zurückgezogen werden. Es ergibt sich die Situation gemäss Figur 6.

Zwischen dem Dorn 170 und dem Verschlussdeckel 1 ist nun eine abgedichtete Kammer 10 gebildet. Nun kann die Dichtigkeitsprüfung durchgeführt werden. Durch die Gaszuführung 176 im Dorn 170 wird Druckluft in die Kammer 10 eingeleitet, bis ein Überdruck von 0.5 bar erreicht ist. Das Erreichen dieses vorgegebenen Überdrucks wird durch eine Druckmessvorrichtung in der Zuführung erfasst und das Ventil in der Zuführung wird geschlossen. Nach einer vorgegebenen Wartezeit von z. B. 5 s wird der Innendruck zwei Mal in einem vorgegebenen zeitlichen Abstand von z. B. 1 s gemessen und der Druckabfall zwischen diesen Messungen bestimmt. Anhand des Druckabfalls kann die Dichtigkeit des Verschlussdeckels 1 klassiert werden:

| **Druckabfall** | **Beurteilung** | **Klassierung** |
|---|---|---|
| bis 0.008 bar | gut | grün |
| 0.008 - 0.050 bar | ausreichend | gelb |
| über 0.050 bar | ungenügend | rot |

Es können weitere Messwerte aufgenommen und ausgewertet werden. Dabei kann beispielsweise eine Messreihe des Druckabfalls durch eine lineare oder nichtlineare Funktion approximiert werden.

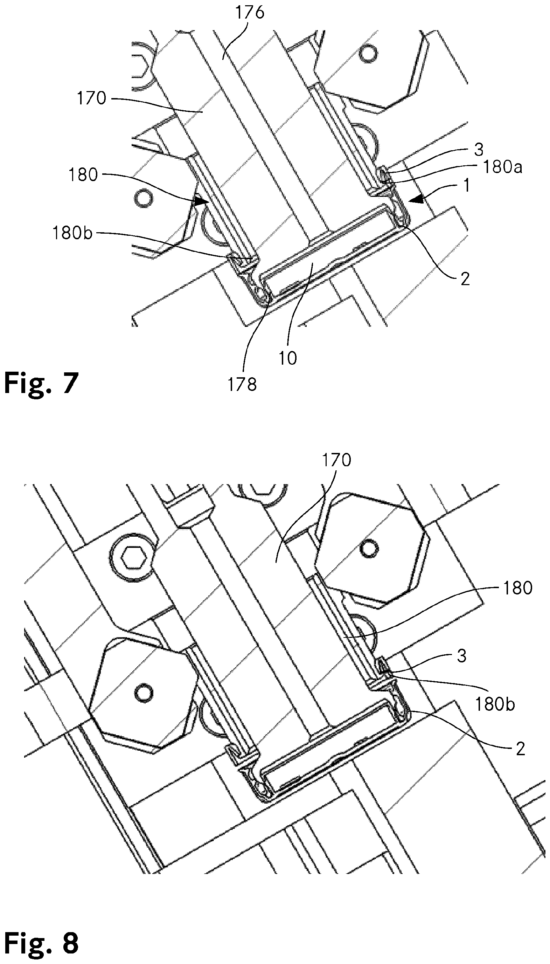

Nach Abschluss der Messung wird die Kammer 10 entlüftet. Anschliessend wird der Tisch 151 um 0.7 mm nach unten, vom Dorn 170 weg, verfahren. Der Abstand bleibt klein, damit sich der auf dem Dorn 170 befindliche Deckel-Grundkörper während der nachfolgenden Prüfschritte nicht verkanten kann. Ebenso wird die Mitnahmehülse 180 mit Hilfe der Linearführung 160 nach unten bewegt, bis ihr Kontaktbereich 180a mit dem Wulst 180b in den Verschlussdeckel 1 eingedrungen ist. Der Wulst 180b drückt dabei den nach innen ragenden Teil des Garantiebandes 3 temporär radial nach aussen. Aufgrund seiner Elastizität schnappt er unmittelbar nach dem Durchgang des Wulstes 180b wieder nach innen zurück, so dass der Wulst 180b hinter einem entsprechenden Hinterschnitt positioniert ist. Es ergibt sich die in der Figur 7 gezeigte Situation.

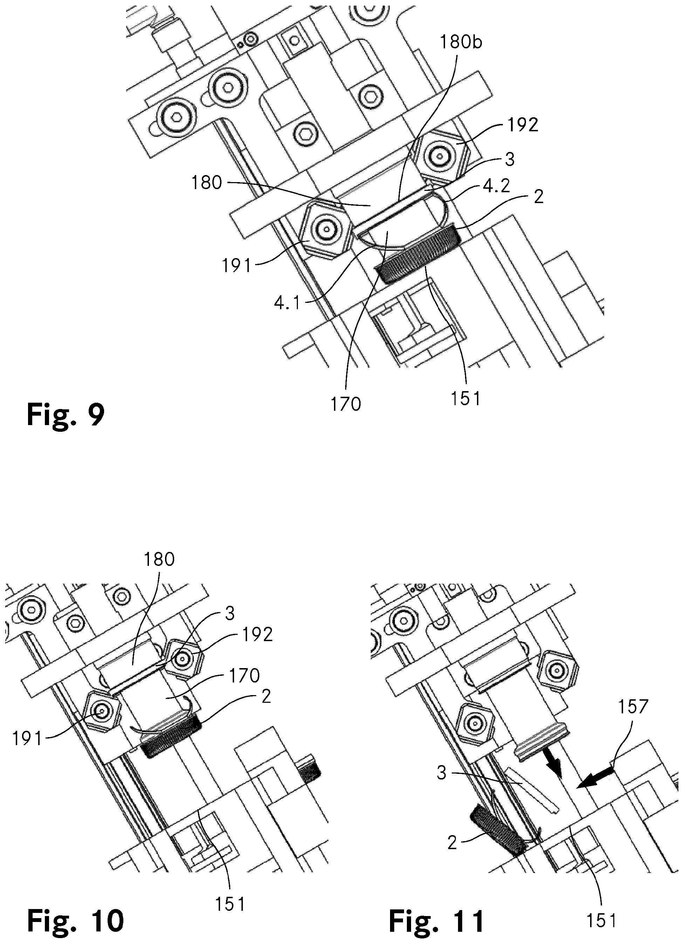

Die Mitnahmehülse 180 wird nun mit Hilfe der Linearführung 160 nach oben verfahren. Dadurch ergibt sich eine wachsende Abreissl<raft zwischen dem auf dem Dorn 170 abgestützten Deckelgrundkörper 2 und dem am Wulst 180b gehaltenen Garantieband 3. Während dieser Bewegung wird die Abreissl<raft durch die Kraftmesseinheit 171 gemessen, und die entsprechenden Kraftwerte werden an eine Verarbeitungseinheit weitergegeben. Bei einem gewissen Weg der Mitnahmehülse 180 und einer entsprechenden gewissen Abreissl<raft reisst das Garantieband 3 vom Deckelgrundkörper 2 ab, das Garantieband 3 bleibt aber über die Verbindungen 4.1, 4.2 des Anbindungsmittels weiterhin mit dem Deckelgrundkörper 2 verbunden (siehe Figuren 8, 9).

Die Mitnahmehülse 180 wird weiter vom freien Ende des Dorns 170 weg nach oben bewegt, bis auch die Verbindungen 4.1, 4.2 reissen (siehe Figur 10). Danach wird auch der Tisch 151 nach unten, vom Dorn 170 weg, bewegt, so dass der Deckelgrundkörper nach dem Reissen der Verbindungen 4.1, 4.2 vom Dorn 170 freigegeben wird. Das Lösen des Deckelgrundkörpers vom Dorn 170 wird durch einen Drucl<luftstoss durch die Mündung der Gaszuführung 176 unterstützt. Die Mitnahmehülse 180 passiert zudem mit dem am Wulst 180b gehaltenen Garantieband 3 die Schneidmesser 191, 192. Das Garantieband 3 wird durch die beiden Schneidmesser 191, 192 in zwei Teile zerschnitten. Da diese nicht mehr durch den Wulst 180b zurückgehalten werden, fallen sie aufgrund der Schwerkraft nach unten auf den Tisch 151. Durch eine Druckluftdüse 157 wird nun ein Drucl<luftstoss erzeugt, um den Deckelgrundkörper 2 und das Garantieband 3 vom Tisch 151 weg zu befördern (siehe Figur 11).

Die Geschwindigkeit der linearen Bewegung der Mitnahmehülse 180 kann in den verschiedenen Phasen des beschriebenen Kreisprozesses unterschiedlich gewählt werden. So ist beispielsweise folgender Ablauf möglich:

| Phase | Startposition | Endposition | Geschwindigkeit |
|---|---|---|---|
| 1 - Einfahren | 15 mm | 0 mm | -v₁ |
| 2 - Messen I | 0 mm | 3 mm | V₂ |
| 3 - Distanzieren | 3 mm | 15 mm | V₃ |
| 4 - Messen II | 15 mm | 20 mm | V₄ |
| 5 - Schneiden | 20 mm | 30 mm | v₅ |
| 6 - Zurückführen | 30 mm | 15 mm | v₆ = -v₃ |

Dabei gilt in der Regel v₂, v₄ (Messgeschwindigkeit) < v₁ (Einfahrgeschwindigkeit) < v₅ (Schneidgeschwindigkeit) < v₃ (Distanzieren, Eilgang). Die Messgeschwindigkeit ist in der Regel durch einen Standard vorgegeben und beträgt beispielsweise 2 mm/s, die anderen Geschwindigkeiten können im Hinblick auf eine hohe Prozesssicherheit und einen schnellen Ablauf optimiert werden.

Die Positionen sind hier von der maximal ausgefahrenen Position aus referenziert, in welcher die Stirnfläche des Dorns 170 von der Auflagefläche des Tisches 151 lediglich einen geringfügigen Abstand von einigen mm aufweist.

Zur Anpassung an verschiedene Geometrien des Verschlussdeckels lassen sich Elemente der beschriebenen Prüfvorrichtung einfach auswechseln, namentlich der Vorderteil des Dorns, die Hülse und die Schneidmesser.

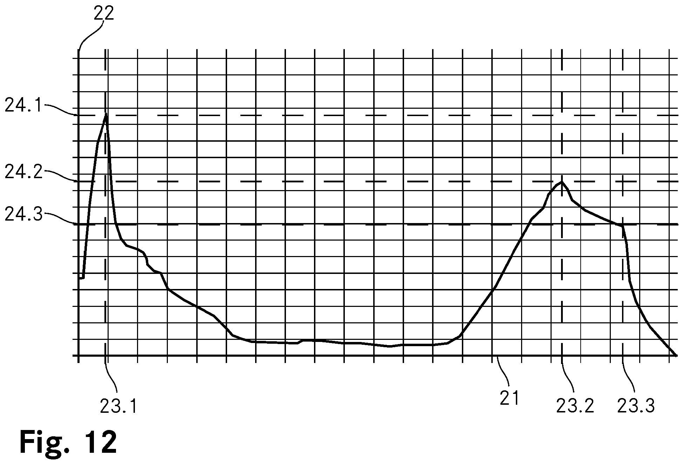

Die Figur 12 zeigt ein I<raft-Weg-Diagramm eines Prüfvorgangs eines Verschlussdeckels mit Garantiering und einem Anbindungsmittel mit zwei Verbindungen. Entlang der horizontalen Achse 21 ist der Weg, entlang der vertikalen Achse 22 die gemessene Abreissl<raft eingetragen. Es ist gut ersichtlich, dass die Abreissl<raft ab dem Kontakt der Stirnseite des Dorns 170 mit dem Boden 2b des Deckelgrundkörpers 2 zunächst allmählich anwächst. In dieser Phase werden insbesondere die Stege zwischen dem Grundkörper und dem Garantieband gedehnt, was einen gewissen Kraftaufwand erfordert. Sobald das Garantieband abreisst, fällt die Abreissl<raft stufenweise, mit dem zeitversetzten Reissen der einzelnen Stege zum Garantieband, ab. Es folgt eine Phase, in der der Kraftaufwand gering ist, weil die verbleibenden Verbindungen des Anbindungsmittels der weiteren Separation keinen grossen Widerstand entgegensetzen. Erst wenn diese Verbindungen gedehnt werden müssen, steigt die Kraft wieder an. Beim Reissen der ersten der Verbindungen ergibt sich ein weiteres lokales Kraftmaximum, erst wenn dann auch die zweite Verbindung reisst und der Garantiering endgültig vom Deckelgrundkörper getrennt ist, fällt die Kraft wieder stark ab.

Relevante Grössen, die sich aus dem Verlauf bestimmen lassen, sind insbesondere die bei den lokalen Maxima gemessenen Kräfte 24.1, 24.2und die entsprechenden Wege 23.1, 23.2 bzw. die Kraft 24.3 beim Reissen eines zweiten Verbindungselements des Anbindungsmittels und der dazugehörige Weg 23.3. Sie können zur Bewertung der Qualität der Verbindung zwischen Garantieband und Grundkörper herangezogen werden. Wird der Kraftverlauf detaillierter betrachtet, so ist auch sichtbar, dass einige Stege später reissen als andere: Ein spätes Abreissen deutet auf stumpfwerdende Schneiden der für das Erzeugen der Schlitzgeometrie verwendeten Messer hin. Andere Eigenheiten des Verlaufs können auf ein fehlerhaftes Einspannen des Deckels in der Prüfeinrichtung hinweisen, worauf das Ergebnis verworfen und die Messung automatisch am nächsten Deckel wiederholt werden kann.

Die Erfindung ist nicht auf das dargestellte Ausführungsbeispiel beschränkt. So lassen sich insbesondere konstruktive Details der einzelnen Komponenten anders gestalten. Aufgrund der Geschwindigkeit des Messvorgangs und seiner Reproduzierbarkeit lässt sich die Prüfeinheit auch im manuellen Betrieb vorteilhaft einsetzen. Insbesondere die Zuführung kann in diesem Fall vereinfacht werden.

Zusammenfassend ist festzustellen, dass die Erfindung eine Vorrichtung schafft, welche die Prüfung von Verschlussdeckeln vereinfacht.

## Patentansprüche

1. Vorrichtung zum Prüfen einer Verbindung (4, 4.1, 4.2) eines Garantiebands (3) und/oder mindestens eines Anbindungsmittel eines Verschlussdeckels (1) mit einem Deckelgrundkörper (2) und zum Prüfen einer Dichtigkeit des Deckelgrundkörpers (2), umfassend
a) ein Mitnahmeelement (180) zum Ergreifen des Garantiebands (3) und/oder des mindestens einen Anbindungsmittels;
b) ein I<ontal<telement (170) für den Deckelgrundkörper (2), wobei das Mitnahmeelement (180) und das I<ontal<telement (170) derart in einer Interal<tionsrichtung relativ zueinander beweglich sind, dass eine Abreissl<raft auf Verbindungselemente zwischen Deckelgrundkörper (2) und Garantieband (3) und/oder das mindestens eine Anbindungsmittel ausübbar ist;
c) eine Kraftmessvorrichtung (171) zur Messung der Abreissl<raft während der Relativbewegung zwischen dem Garantieband (3) und/oder Anbindungsmittel und dem Deckelgrundkörper (2);
**dadurch gekennzeichnet, dass**
das KontaKtelement (170) eine Dichtstruktur (178) aufweist, so dass eine abgedichtete Kammer (10) zwischen dem KontaKtelement (170) und dem Deckelgrundkörper (2) ausbildbar ist, und dass eine Einrichtung zur Einstellung eines vorgegebenen Gasdrucks in der Kammer (10) und eine Einrichtung zur Erfassung eines Gasaustritts oder Gaseintritts vorhanden sind.

2. Vorrichtung nach Anspruch 1, **dadurch gekennzeichnet, dass** die Einrichtung zur Erfassung des Gasaustritts oder Gaseintritts eine Druckmessvorrichtung zur Messung eines Kammerdrucks umfasst.

3. Vorrichtung nach Anspruch 1 oder 2, **dadurch gekennzeichnet, dass** die Einrichtung zur Erfassung des Gasaustritts oder Gaseintritts eine Schnüffelsonde umfasst.

4. Vorrichtung nach einem der Ansprüche 1 bis 3, **gekennzeichnet durch** eine Auflage für den Deckelgrundkörper (2), die in der Interal<tionsrichtung linear beweglich ist, so dass während des Prüfens der Dichtigkeit der Deckelgrundkörper (2) zwischen der Auflage und dem I<ontal<telement (170) passend aufnehmbar ist.

5. Vorrichtung nach Anspruch 4, **dadurch gekennzeichnet, dass** die Auflage eine elastische Oberfläche aufweist, insbesondere aus einem Elastomer oder Polymer mit einer Härte von 65 Shore A oder weniger.

6. Vorrichtung nach einem der Ansprüche 1 bis 5, **gekennzeichnet durch** eine selektiv aktivierbare Positioniereinrichtung für den Deckelgrundkörper (2).

7. Vorrichtung nach einem der Ansprüche 1 bis 6, **dadurch gekennzeichnet, dass** das I<ontal<telement (170) stirnseitig an einem Dorn ausgebildet ist und dass das Mitnahmeelement (180) entlang der Interal<tionsrichtung linear relativ zum Dorn beweglich ist.

8. Vorrichtung nach Anspruch 7, **dadurch gekennzeichnet, dass** eine Dornlängsrichtung zu einer horizontalen Ebene einen Winkel von mindestens 30° aufweist, wobei die Bewegung zur Messung der Abreissl<raft nach oben erfolgt und wobei die Vorrichtung eine Auffangeinrichtung für den Deckelgrundkörper (2) und das abgerissene Garantieband (3) umfasst.

9. Vorrichtung nach Anspruch 8, **dadurch gekennzeichnet, dass** die Auffangeinrichtung eine in der Auffangposition geneigte Auffangfläche aufweist, so dass der aufgefangene Deckelgrundkörper (2) und das aufgefangene Garantieband (3) aufgrund der Schwerkraft automatisch weiter gefördert werden.

10. Vorrichtung nach einem der Ansprüche 1 bis 9, **gekennzeichnet durch** eine Ausblasvorrichtung zum Abtransport des Deckelgrundkörpers (2) und/oder des Garantiebandes (3).

11. Vorrichtung nach einem der Ansprüche 1 bis 10, **gekennzeichnet durch** eine Trennvorrichtung zum Durchtrennen des Garantiebandes (3) nach dem Abreissen vom Deckelgrundkörper (2).

12. Vorrichtung nach den Ansprüchen 7 und 11, **dadurch gekennzeichnet, dass** die Trennvorrichtung mindestens ein im Umfangsbereich des Dorns angeordnetes Schneidmesser (191, 192) umfasst, welches derart ausgebildet ist, dass das Garantieband (3) bei einer Bewegung über das Schneidmesser (191, 192), entlang der Dornlängsrichtung, durchtrennt wird.

13. Vorrichtung nach einem der Ansprüche 1 bis 12, umfassend
d) eine Zufuhreinrichtung zur automatischen Zufuhr des Verschlussdeckels (1) zum Mitnahmeelement (180) und zum I<ontal<telement; und
e) eine Abfuhreinrichtung zur automatischen Abfuhr des Deckelgrundkörpers (2) und des abgerissenen Garantiebandes (3) vom Mitnahmeelement (180) und/oder dem I<ontal<telement.

14. Anlage zum Schneiden eines Garantiebands (3) und/oder mindestens eines Anbindungsmittels eines Verschlussdeckels (1), umfassend
- eine Schneideinrichtung zum Erzeugen umfangsseitiger Schnitte zur Bildung des Garantiebands (3) und/oder des mindestens einen Anbindungsmittels an einem Deckelgrundkörper (2) des Verschlussdeckels (1);
- eine nachfolgend zur Schneideinrichtung angeordnete Vorrichtung nach Anspruch 13 zum Prüfen einer Verbindung (4, 4.1, 4.2) des Garantiebands (3) und/oder des mindestens einen Anbindungsmittels mit dem Deckelgrundkörper (2),
wobei eine Zufuhr des Verschlussdeckels (1) von der Schneideinrichtung zur Vorrichtung zum Prüfen automatisch erfolgt.

15. Verfahren zum Prüfen einer Verbindung (4, 4.1, 4.2) eines Garantiebands (3) und/oder mindestens eines Anbindungsmittels eines Verschlussdeckels (1) mit einem Deckelgrundkörper (2) und zum Prüfen einer Dichtigkeit des Deckelgrundkörpers (2), insbesondere mit einer Vorrichtung nach einem der Ansprüche 1 bis 13, umfassend folgende Schritte:
a) Kontaktieren des Deckelgrundkörpers (2) mit einem I<ontal<telement, derart dass zwischen dem I<ontal<telement (170) und dem Deckelgrundkörper (2) eine abgedichtete Kammer (10) ausgebildet wird;
b) Einstellen eines vorgegebenen Gasdrucks in der Kammer (10);
c) Erfassen eines Gasaustritts aus der Kammer (10) oder eines Gaseintritts in die Kammer (10);
d) Ergreifen des Garantiebands (3) und/oder des mindestens einen Anbindungsmittels mit einem Mitnahmeelement;
e) Durchführen einer Relativbewegung zwischen dem Mitnahmeelement (180) und dem I<ontal<telement (170), so dass eine Abreissl<raft auf Verbindungselemente zwischen Deckelgrundkörper (2) und Garantieband (3) und/oder das mindestens eine Anbindungsmittel ausgeübt wird;
f) Messen der Abreissl<raft während der Relativbewegung zwischen dem Garantieband (3) und/oder Anbindungsmittel und dem Deckelgrundkörper (2).

16. Verfahren nach Anspruch 15, **gekennzeichnet durch** den zusätzlichen Schritt des Einleitens von Druckgas zum Abblasen des Deckelgrundkörper (2)s vom I<ontal<telement.

17. Verfahren nach Anspruch 15 oder 16, **gekennzeichnet durch** den zusätzlichen Schritt des Messens einer Andruckkraft zwischen dem I<ontal<telement (170) und dem Deckelgrundkörper (2) während des Einstellens des vorgegebenen Gasdrucks und/oder des Erfassens des Gasaustritts oder Gaseintritts, wobei insbesondere dieselbe Kraftmesseinrichtung (171) verwendet wird wie zum Messen der Abreissl<raft.

18. Verfahren nach einem der Ansprüche 15 bis 17, **dadurch gekennzeichnet, dass** zur Ausbildung der Kammer (10) der Deckelgrundkörper (2) zwischen dem I<ontal<telement (170) und einer Auflage passend aufgenommen wird und dass nach dem Erfassen des Gasaustritts oder Gaseintritts und vor der Durchführung der Relativbewegung die Auflage vom Deckelgrundkörper (2) zurückgezogen wird.

## Claims

1. Device for testing a connection (4, 4.1, 4.2) of a guarantee band (3) and/or at least one tethering means of a closure lid (1) to a lid base body (2) and for testing a leaktightness of the lid base body (2), comprising
a) an entrainment element (180) for gripping the guarantee band (3) and/or the at least one tethering means;
b) a contact element (170) for the lid base body (2), wherein the entrainment element (180) and the contact element (170) are movable relative to each other in a direction of interaction such that a tear-off force can be exerted on connecting elements between the lid base body (2) and the guarantee band (3) and/or the at least one tethering means;
c) a force measuring device (171) for measuring the tear-off force during the relative movement between the guarantee band (3) and/or tethering means and the lid base body (2);
**characterized in that** the contact element (170) has a sealing structure (178), so that a sealed chamber (10) can be formed between the contact element (170) and the lid base body (2), and **in that** a device for setting a predetermined gas pressure in the chamber (10) and a device for detecting a gas outlet or gas inlet are present.

2. Device according to claim 1, **characterized in that** the device for detecting the gas outlet or gas inlet comprises a pressure measuring device for measuring a chamber pressure.

3. Device according to claim 1 or 2, **characterized in that** the device for detecting the gas outlet or gas inlet comprises a sniffer probe.

4. Device according to one of claims 1 to 3, **characterized by** a support for the lid base body (2), which is linearly movable in the direction of interaction, so that during leak tightness testing the lid base body (2) can be accommodated between the support and the contact element (170).

5. Device according to claim 4, **characterized in that** the support has an elastic surface, in particular made of an elastomer or polymer with a hardness of 65 Shore A or less.

6. Device according to one of claims 1 to 5, **characterized by** a selectively activatable positioning device for the lid base body (2).

7. Device according to one of claims 1 to 6, **characterized in that** the contact element (170) is formed on the end face of a mandrel and **in that** the entrainment element (180) is linearly movable relative to the mandrel along the direction of interaction.

8. Device according to claim 7, **characterized in that** a longitudinal direction of the mandrel has an angle of at least 30° to a horizontal plane, wherein the movement for measuring the tear-off force takes place upwards and wherein the device comprises a catching device for the lid base body (2) and the torn-off guarantee band (3).

9. Device according to claim 8, **characterized in that** the catching device has a catching surface inclined in the catching position, so that the caught lid base body (2) and the caught guarantee band (3) are automatically conveyed further due to the force of gravity.

10. Device according to one of claims 1 to 9, **characterized by** a blow-out device for removing the lid base body (2) and/or the guarantee band (3).

11. Device according to one of claims 1 to 10, **characterized by** a cutting device for cutting the guarantee band (3) after it has been torn off the lid base body (2).

12. Device according to claims 7 and 11, **characterized in that** the cutting device comprises at least one cutting blade (191, 192) arranged in the circumferential region of the mandrel, which is designed in such a way that the guarantee band (3) is severed during a movement over the cutting blade (191, 192) along the longitudinal direction of the mandrel.

13. Device according to one of claims 1 to 12, comprising
d) a feeding device for automatically feeding the closure lid (1) to the entrainment element (180) and to the contact element; and
e) a removal device for automatically removing the lid base body (2) and the torn-off guarantee band (3) from the entrainment element (180) and/or the contact element.

14. System for cutting a guarantee band (3) and/or at least one tethering means of a closure lid (1), comprising
- a cutting device for producing circumferential cuts to form the guarantee band (3) and/or the at least one tethering means on a lid base body (2) of the closure lid (1);
- a device according to claim 13, arranged downstream of the cutting device, for testing a connection (4, 4.1, 4.2) of the guarantee band (3) and/or of the at least one tethering means to the lid base body (2),
wherein the closure lid (1) is automatically fed from the cutting device to the device for testing.

15. Method for testing a connection (4, 4.1, 4.2) of a guarantee band (3) and/or at least one tethering means of a closure lid (1) with a lid base body (2) and for testing a leak tightness of the lid base body (2), in particular with a device according to one of claims 1 to 13, comprising the following steps:
a) contacting the lid base body (2) with a contact element such that a sealed chamber (10) is formed between the contact element (170) and the lid base body (2);
b) setting a predetermined gas pressure in the chamber (10);
c) detecting a gas outlet from the chamber (10) or a gas inlet into the chamber (10);
d) gripping the guarantee band (3) and/or the at least one tethering means with an entrainment element;
e) performing a relative movement between the entrainment element (180) and the contact element (170) so that a tear-off force is exerted on connecting elements between lid base body (2) and guarantee band (3) and/or the at least one tethering means;
f) measuring the tear-off force during the relative movement between the guarantee band (3) and/or tethering means and the lid base body (2).

16. Method according to claim 15, **characterized by** the additional step of introducing compressed gas to blow off the lid base body (2) from the contact element.

17. Method according to claim 15 or 16, **characterized by** the additional step of measuring a pressure force between the contact element (170) and the lid base body (2) during the setting of the predetermined gas pressure and/or the detection of the gas outlet or gas inlet, in particular using the same force measuring device (171) as for measuring the breakaway force.

18. Method according to one of claims 15 to 17, **characterized in that**, to form the chamber (10), the lid base body (2) is fittingly received between the contact element (170) and a support and **in that**, after the gas outlet or gas inlet has been detected and before the relative movement is carried out, the support is withdrawn from the lid base body (2).

## Revendications

1. Dispositif, destiné à contrôler une liaison (4, 4.1, 4.2) d'une bande de garantie (3) et / ou d'un moyen d'attache d'un couvercle de fermeture (1) avec un corps de base (2) de couvercle et à contrôler une étanchéité du corps de base (2) de couvercle, comprenant
a) un élément d'entraînement (180), destiné à saisir la bande de garantie (3) et / ou l'au moins un moyen d'attache ;
b) un élément de contact (170) pour le corps de base (2) de couvercle, l'élément d'entraînement (180) et l'élément de contact (170) étant déplaçables l'un par rapport à l'autre dans une direction d'interaction, de telle sorte qu'une force d'arrachement soit susceptible d'être exercée sur des éléments de liaison entre le corps de base (2) de couvercle et la bande de garantie (3) et / ou l'au moins un moyen d'attache ;
c) un dispositif de mesure de la force (171), destiné à mesurer la force d'arrachement pendant le déplacement relatif entre la bande de garantie (3) et / ou le moyen d'attache et le corps de base (2) de couvercle ;
**caractérisé en ce que**
l'élément de contact (170) comporte une structure d'étanchéité (178), de sorte qu'un compartiment (10) étanchéifié puisse être constitué entre l'élément de contact (170) et le corps de base (2) de couvercle et **en ce qu'**un système destiné à régler une pression de gaz prédéfinie dans le compartiment (10) et un système destiné à détecter une sortie de gaz ou une entrée de gaz sont présents.

2. Dispositif selon la revendication 1, **caractérisé en ce que** le système destiné à détecter la sortie de gaz ou l'entrée de gaz comprend un dispositif de mesure de la pression, destiné à mesurer une pression dans le compartiment.

3. Dispositif selon la revendication 1 ou 2, **caractérisé en ce que** le système destiné à détecter la sortie de gaz ou l'entrée de gaz comprend une sonde de reniflage.

4. Dispositif selon l'une quelconque des revendications 1 à 3, **caractérisé par** un support pour le corps de base (2) de couvercle, qui est déplaçable de manière linéaire dans la direction d'interaction, de sorte que pendant le contrôle de l'étanchéité, le corps de base (2) de couvercle puisse être réceptionné de manière ajustée entre le support et l'élément de contact (170).

5. Dispositif selon la revendication 4, **caractérisé en ce que** le support comporte une surface élastique, notamment en un élastomère ou un polymère, d'une dureté de 65 shore A ou moins.

6. Dispositif selon l'une quelconque des revendications 1 à 5, **caractérisé par** un système de positionnement sélectivement activable pour le corps de base (2) de couvercle.

7. Dispositif selon l'une quelconque des revendications 1 à 6, **caractérisé en ce que** l'élément de contact (170) est conçu sur la face frontale d'un mandrin et **en ce que** l'élément d'entraînement (180) est déplaçable de manière linéaire le long de la direction d'interaction par rapport au mandrin.

8. Dispositif selon la revendication 7, **caractérisé en ce qu'**une direction longitudinale du mandrin présente par rapport à un plan horizontal un angle d'au moins 30°, le déplacement pour la mesure de la force d'arrachement s'effectuant vers le haut et le dispositif comprenant un système récepteur pour le corps de base (2) de couvercle et la bande de garantie (3) arrachée.

9. Dispositif selon la revendication 8, **caractérisé en ce que** le système récepteur comporte une surface réceptrice inclinée dans la position de réception, de telle sorte que le corps de base (2) de couvercle réceptionné et la bande de garantie (3) réceptionnée soient automatiquement convoyés ultérieurement, du fait de la force de gravité.

10. Dispositif selon l'une quelconque des revendications 1 à 9, **caractérisé par** un dispositif de soufflage, destiné à faire partir le corps de base (2) de couvercle et / ou la bande de garantie (3) .

11. Dispositif selon l'une quelconque des revendications 1 à 10, **caractérisé par** un dispositif de sectionnement, destiné à sectionner la bande de garantie (3) après l'arrachement du corps de base (2) de couvercle.

12. Dispositif selon les revendications 7 et 11, **caractérisé en ce que** le dispositif de sectionnement comprend au moins une lame de coupe (191, 192) placée dans la zone périphérique du mandrin, laquelle est conçue de telle sorte, que lors d'un déplacement sur la lame de coupe (191, 192), la bande de garantie (3) soit sectionnée le long de la direction longitudinale du mandrin.

13. Dispositif selon l'une quelconque des revendications 1 à 12, comprenant
d) un système d'alimentation pour l'alimentation automatique du couvercle de fermeture (1) vers l'élément d'entraînement (180) et vers l'élément de contact ; et
e) un système d'évacuation pour l'évacuation automatique du corps de base (2) de couvercle et de la bande de garantie (3) arrachée de l'élément d'entraînement (180) et / ou de l'élément de contact.

14. Installation, destinée à couper une bande de garantie (3) et / ou au moins un moyen d'attache d'un couvercle de fermeture (1), comprenant
- un système de coupe, destiné à générer des coupes périphériques, pour créer la bande de garantie (3) et / ou l'au moins un moyen d'attache sur un corps de base (2) de couvercle du couvercle de fermeture (1) ;
- un dispositif selon la revendication 13, placé dans la suite du système de coupe, destiné à contrôler une liaison (4, 4.1, 4.2) entre la bande de garantie (3) et / ou l'au moins un moyen d'attache avec le corps de base (2) de couvercle,
une alimentation du couvercle de fermeture (1) du système de coupe vers le dispositif destiné à contrôler ayant lieu automatiquement.

15. Procédé, destiné à contrôler une liaison (4, 4.1, 4.2) d'une bande de garantie (3) et / ou d'au moins un moyen d'attache d'un couvercle de fermeture (1) avec un corps de base (2) de couvercle et à contrôler une étanchéité du corps de base (2) de couvercle, notamment à l'aide d'un dispositif selon l'une quelconque des revendications 1 à 13, comprenant les étapes suivantes, consistant à :
a) mettre en contact le corps de base (2) de couvercle avec un élément de contact, de telle sorte qu'entre l'élément de contact (170) et le corps de base (2) de couvercle soit conçu un compartiment (10) étanchéifié ;
b) régler une pression de gaz prédéfinie dans le compartiment (10);
c) détecter une sortie de gaz hors du compartiment (10) ou une entrée de gaz dans le compartiment (10) ;
d) saisir la bande de garantie (3) et / ou l'au moins un moyen d'attache avec un élément d'entraînement;
e) réaliser un déplacement relatif entre l'élément d'entraînement (180) et l'élément de contact (170), de telle sorte qu'une force d'arrachement soit exercée sur des éléments de liaison entre le corps de base (2) de couvercle et la bande de garantie (3) et / ou l'au moins un moyen d'attache ;
f) mesurer la force d'arrachement pendant le déplacement relatif entre la bande de garantie (3) et / ou le moyen d'attache et le corps de base (2) de couvercle.

16. Procédé selon la revendication 15, **caractérisé par** l'étape additionnelle consistant à introduire du gaz sous pression pour souffler le corps de base (2) de couvercle de l'élément de contact.

17. Procédé selon la revendication 15 ou 16, **caractérisé par** l'étape additionnelle consistant à mesurer une force de pression entre l'élément de contact (170) et le corps de base (2) de couvercle pendant le réglage de la pression de gaz prédéfinie et / ou la détection de la sortie de gaz ou de l'entrée de gaz, notamment le même système de mesure de la force (171) étant utilisé que pour mesurer la force d'arrachement.

18. Procédé selon l'une quelconque des revendications 15 à 17, **caractérisé en ce que** pour constituer le compartiment (10), le corps de base (2) de couvercle est réceptionné de manière ajustée entre l'élément de contact (170) et un support et **en ce qu'**après la détection de la sortie de gaz ou de l'entrée de gaz, et avant la réalisation du déplacement relatif, le support est retiré vers l'arrière du corps de base (2) de couvercle.
